Europäisches Patentamt

European Patent Office

Office européen des brevets

(11) Veröffentlichungsnummer: **0 350 743**

**A2**

(12) **EUROPÄISCHE PATENTANMELDUNG**

(21) Anmeldenummer: 89112078.4

(22) Anmeldetag: 01.07.89

(51) Int. Cl.4: **C08G 63/19**

(30) Priorität: 15.07.88 DE 3824069

(43) Veröffentlichungstag der Anmeldung:
17.01.90 Patentblatt 90/03

(84) Benannte Vertragsstaaten:
DE FR GB IT NL

(71) Anmelder: BAYER AG

D-5090 Leverkusen 1 Bayerwerk(DE)

(72) Erfinder: Tacke, Peter, Dr.
Brandenburger Strasse 12
D-4150 Krefeld(DE)
Erfinder: Bottenbruch, Ludwig, Dr.
Wöhlerstrasse 5
D-4150 Krefeld(DE)
Erfinder: Buysch, Hans-Josef, Dr.
Brandenburger Strasse 28
D-4150 Krefeld(DE)
Erfinder: Grigo, Ulrich, Dr.
Michelsheide 9
D-4152 Kempen 3(DE)
Erfinder: Alewelt, Wolfgang, Dr.
Stratumer Feld 17
D-4150 Krefeld(DE)

(54) Verfahren zur Herstellung von aromatischen Polyestern.

(57) Aromatische Polyester werden hergestellt durch Umesterung von aromatischen Dicarbonsäuredialkylestern mit Diesterderivaten zweiwertiger Phenole bei Temperaturen von etwa 260 bis 350 °C unter Entfernung der entstehenden Monocarbonsäurealkylester aus dem Reaktionsgemisch.

EP 0 350 743 A2

# EP 0 350 743 A2

## Verfahren zur Herstellung von aromatischen Polyestern

Die Erfindung betrifft ein Verfahren zur Herstellung von aromatischen Polyestern.

Die Herstellung von aromatischen Polyestern durch Acetatumesterung ist bekannt. Gemäß den europäischen Patenten 26 120 und 26 121 werden zur Durchführung dieses Verfahrens Ester aus Diphenolen und aliphatischen Monocarbonsäuren mit aromatischen Dicarbonsäuren unter Abdestillieren der Monocarbonsäure umgesetzt. Zur Vermeidung der Sublimation der aromatischen Dicarbonsäuren wird ein hochsiedendes, inertes Lösungsmittel bei der Umsetzung eingesetzt, beispielsweise Diphenylether. Nachteilig bei diesem Verfahren ist jedoch die schwierige quantitative Entfernung des hochsiedenden inerten Lösungsmittels aus den fertigen Polyestern. Bei Verzicht auf ein solches Lösungsmittel führt die Sublimation der aromatischen Dicarbonsäuren, besonders der Terephthalsäure, zur Verstopfung der Zu- und Ableitungen der Reaktionsapparatur. Außerdem läßt sich bei dieser Umesterung die Stöchiometrie kaum einhalten, wodurch keine ausreichenden Molgewichte bei den Polyestern erreicht werden können.

Es ist nun versucht worden, anstelle der freien aromatischen Dicarbonsäuren deren Dialkylester zu verwenden. In der japanischen Patentanmeldung 58/215 419 ist ein solches Verfahren beispielsweise beschrieben. Danach werden zunächst die Dialkylester der aromatischen Dicarbonsäuren unter Abdestillieren von Alkylestern aliphatischer Carbonsäuren mit Arylestern aliphatischer Carbonsäuren zu den Diarylestern der aromatischen Dicarbonsäuren umgesetzt. Aus diesen erhält man dann durch Reaktion mit Acylderivaten der Diphenole unter Abdestillieren von Arylestern der aliphatischen Carbonsäuren die rein aromatischen Polyester. Dieses Verfahren ist jedoch sehr umständlich, da zwei Reaktionsstufen erforderlich sind. Außerdem fallen zwei verschiedene Abfallprodukte an, die aus den Polyestern entfernt werden müssen.

Es wurde nun ein Verfahren zur Herstellung von aromatischen Polyestern gefunden, das dadurch gekennzeichnet ist, daß man aromatische Dicarbonsäuredialkylester mit Diesterderivaten zweiwertiger Phenole bei Temperaturen von 260 bis 350 °C umsetzt und die entstehenden Alkylester der Monocarbonsäuren aus dem Reaktionsgemisch entfernt.

Das erfindungsgemäße Verfahren kann als sogenanntes Eintopfverfahren durchgeführt werden, d.h., daß die Diesterderivate der zweiwertigen Phenole schon in Gegenwart der Dicarbonsäuredialkylester hergestellt werden können.

Bevorzugt wird die erfindungsgemäße Umsetzung bei Temperaturen von 270 bis 320 °C durchgeführt. Die entstehenden Alkylester der Monocarbonsäuren werden nach dem erfindungsgemäßen Verfahren aus dem Reaktionsgemisch durch Destillation, bevorzugt im Vakuum, bei 0,1 bis 0,001 bar entfernt.

Nach dem erfindungsgemäßen Verfahren werden die als Ausgangsstoffe dienenden Dialkylester der aromatischen Dicarbonsäuren und die Diesterderivate der zweiwertigen Phenole zur Erzielung von möglichst hohen Molgewichten bei den aromatischen Polyestern vornehmlich in stöchiometrischen Mengen (0,95 bis 1,05, bevorzugt 1 Mol Dicarbonsäuredialkylester pro Mol Diphenolester) eingesetzt.

Das erfindungsgemäße Verfahren kann zur Beschleunigung der Reaktion in Gegenwart von sogenannten Umesterungskatalysatoren durchgeführt werden. Als Umesterungskatalysatoren kommen beispielsweise in Betracht die Alkalihydroxide, Erdalkalihydroxide, Erdalkalicarbonate und Alkalicarbonate, wie NaOH, KOH, LiOH, CaOH, MgOH, $Na_2CO_3$, $NaHCO_3$, $CaCo_3$ Zinkacetat, Magnesiumacetat, Tetralkyltitanate, Dialkylstannate, Tetraalkylstannate, Arylstannate, gemischte Zinn-Ester-Salze, Phosphine und/oder tertiäre Amine. Bevorzugt werden beim erfin dungsgemäßen Verfahren die Zinn- und Titanverbindungen eingesetzt. Die Umesterungskatalysatoren werden in Mengen bis zu 3 Gew.-%, bevorzugt 0,001 bis 2 Gew.-%, bezogen auf die eingesetzten Diphenole, eingesetzt. Die Katalysatoren können zu jedem beliebigen Zeitpunkt während des Verfahrens zugegeben werden, somit auch schon während der Herstellung der Diphenolester.

Als aromatische Dicarbonsäuren können in das erfindungsgemäße Verfahren solche eingesetzt werden, wie sie in der europäischen Patentschrift 26 120 genannt werden. Vorzugsweise werden eingesetzt die Iso- und/oder Terephthalsäure. Werden die Terephthalsäure und die Isophthalsäure im Gemisch untereinander eingesetzt, so ist ein Molverhältnis von 4 bis 2 Mol Terephthalsäure zu 1 Mol Isophthalsäure bevorzugt. Die aromatischen Dicarbonsäuren werden, wie zuvor beschrieben, in Form ihrer Dialkylester in das erfindungsgemäße Verfahren eingesetzt. Als Dialkylester wird bevorzugt der Dimethylester eingesetzt. Es ist jedoch auch möglich, die Ethyl-, Propyl-und Butylester der entsprechenden Dicarbonsäure einzusetzen.

Die zweiwertigen Phenole, die zur Herstellung der aromatischen Polyester nach dem erfindungsgemäßen Verfahren eingesetzt werden können, sind beispielsweise in der DE-OS 29 40 024 beschrieben. Bevorzugt wird Bisphenol-A eingesetzt. Wie zuvor erwähnt, werden die zweiwertigen Phenole in Form ihrer Diesterderivate verwendet. So kön nen zum Beispiel die zweiwertigen Phenole mit Essigsäure, Propionsäure und Benzoesäure, bevorzugt Essigsäure, verestert werden. Die bevorzugt eingesetzten Bisphenol-A-

2

Diacetate können unter anderem durch Umsetzung des entsprechenden Bisphenols mit Acetanhydrid hergestellt werden, wie in den europäischen Patentschriften 26 121, 26 684 und 28 030 beschrieben.

Die erfindungsgemäß hergestellten aromatischen Polyester besitzen in der Regel relative Lösungsviskositäten von 1,2 bis 1,8, insbesondere von 1,3 bis 1,6 (gemessen mit einer Lösung von 1 g Subtanz in 100 ml Lösung (Phenol/o-Dichlorbenzol 1:1 [Gewichtsmenge]).

Da die erfindungsgemäß hergestellten aromatischen Polyester hohe Schmelzeviskositäten besitzen, ist ihre Herstellung in mit Rührern ausgestatteten Glaskolben oder Stahlkesseln schwierig. Deshalb werden in solchen Rührapparaturen vorzugsweise nur leicht rührbare Vorkendensate mit relativen Lösungsviskositäten von ca. 1,06 bis 1,18 (gemessen an einer Lösung von 0,5 g Ester in 100 ml Lösung bei 25°C; als Lösungsmittel dienen Dichlormethan oder 1:1-Gemische aus Phenol und o-Dichlorbenzol) hergestellt. Die Weiterkondensation kann dann beispielsweise in der Schmelze in einem Vakuumextruder, bei Kleinstmenten im Labor im Glaskolben mit starkem Rührer erfolgen. Außerdem ist die Nachkondensation in der festen Phase möglich. Die nach dem erfindungsgemäßen Verfahren hergestellten aromatischen Polyester können in üblichen Ver arbeitungsmaschinen durch Extrusion zu Halbzeug und durch Spritzgießen zu Formteilen verarbeitet werden. Weiterhin können die aromatischen Polyester anderen Polymeren zugemischt werden zur Verbesserung von deren Eigenschaften.

Beispiel 1

Herstellung eines aromatischen Polyesters aus Bisphenol-A (BPA) und Isophthalsäuredimethylester

| 51,3 | g | (0,225 Mol) BPA |
|---|---|---|
| 50,53 | g | (0,495 Mol) Acetanhydrid |
| 43,7 | g | (0,225 Mol) Dimethylisophthalat |
| 50 | mg | Di-n-butyl-Zinn-dilaurat |

wurden in einen Dreihalskolben mit Rührer und Destillationsbrücke gefüllt und unter $N_2$ 30 Min. unter Rückfluß erhitzt. Anschließend wurde die entstandene Essigsäure und der Acetanhydrid-Überschuß abdestilliert. Die Temperatur der Schmelze wurde dann innerhalb von 3 Stunden kontinuierlich auf 260°C angehoben, während dieser Zeit destillierte Methylacetat über. Bei Erreichen von 260°C wurde Vakuum von ca. 20 mbar angelegt und die Temperatur der Schmelze innerhalb 45 Min. auf 275°C gebracht. Die Schmelze war dann so zäh geworden, daß sie sich am Rührer aufwickelte. Der erhaltene Polyester (Vorkondensat) war nach dem Erkalten noch spröde. Er konnte mühelos zerkleinert werden. Die relative Lösungsviskosität ($\eta_{rel}$) betrug 1,153 (gemessen mit einer Lösung von 0,5 g Substanz in 100 ml Lösung. Als Lösungsmittel diente ein Gemisch aus je 50 Gew.-% Phenol und o-Dichlorbenzol.

20 g des Vorkondensates wurden in einem Glaskolben mit Stahlrührer bei 300°C und 2 mbar noch 3 Stunden weiterkondensiert. $\eta_{rel}$ stieg dabei auf 1,418.

Beispiel 2

Herstellung eines Polyesters aus Bisphenol-A und einem Gemisch aus Dimethyltere- und -isophthalat (Molverhältnis 7:3)

Es wurde verfahren wie in Beispiel 1, jedoch ein Gemisch aus
30,6 g Dimethylterephthalat und
13,1 g Dimethylisophthalat
eingesetzt. Als Katalysator dienten ca. 50 mg Tetraisopropyltitanat. Das Vorkondensat besaß in diesem Falle $\eta_{rel}$ 1,142, der fertige Polyester 1,523.

Beide Ansätze wurden in Gegenwart eines Stückes Blech aus V 4 A-Stahl (ca. 2,7 g) durchgeführt. Bei Wägung dieses Bleches vor und nach dem Versuch konnte kein Materialverlust festgestellt werden (Wägung auf 1/10 mg genau), d.h. keine Korrosion.

**Ansprüche**

1. Verfahren zur Herstellung von aromatischen Polyestern, dadurch gekennzeichnet, daß man aromatische Dicarbonsäuredialkylester mit Diesterderivaten zweiwertiger Phenole bei Temperaturen von 260 bis 350°C umsetzt und die entstehenden Alkylester der Monocarbonsäuren aus dem Reaktionsgemisch entfernt.

2. Verfahren nach Anspruch 1, dadurch gekennzeichnet, daß man als aromatischen Dicarbonsäuredialkylester die Dicarbonsäuredimethylester einsetzt.

3. Verfahren nach Ansprüchen 1 und 2, dadurch gekennzeichnet, daß man als Diesterderivate zweiwertiger Phenole die Diphenol-diacetate einsetzt.

4. Verfahren nach Ansprüchen 1 bis 3, dadurch gekennzeichnet, daß man als aromatische Dicarbonsäuren Terephthalsäure- und/oder Isophthalsäure einsetzt.

5. Verfahren nach Ansprüchen 1 bis 4, dadurch gekennzeichnet, daß man als zweiwertiges Phenol Bisphenol-A einsetzt.

6. Verfahren nach Ansprüchen 1 bis 5, dadurch gekennzeichnet, daß man die entstehenden Alkylester der Monocarbonsäuren aus dem Reaktionsgemisch durch Destillation im Vakuum entfernt.